# EUROPEAN PATENT APPLICATION

(11) **EP 4 671 588 A1**
(43) Date of publication of application: **31.12.2025**
(21) Application number: 24315312.9
(22) Date of filing: 28.06.2024
(51) Int. Cl.: F16L 21/00, F16L 25/12, F17D 5/00, B25B 27/28

(54) **SYSTEM FOR TRANSPORTING GASEOUS HYDROGEN IN AN AIRCRAFT**

(71) Applicant: AIRBUS OPERATIONS (S.A.S.), 31060 Toulouse (FR)
(72) Inventor: BAUER, Fabian, 31060 Toulouse (FR)
(74) Representative: BCF Global

(57) **Abstract**

A system (1) for transporting a gaseous fluid, like dihydrogen, comprising a first pipe for transporting said fluid, called first pipe (2), a second pipe for transporting said fluid, called second pipe (3), and a connector (4) arranged to connect an end, called first connecting end (6), of the first pipe (2) to an end, called second connecting end (7), of the second pipe (3), a zone (Z) comprising the first connecting end (6) of the first pipe (2), the second connecting end (7) of the second pipe (3) and the connector (4) being called connecting zone (Z), the system (1) comprising a protective jacket (5) around the connecting zone (Z) against said first and second connecting ends (6, 7) and said connector (4).

## Description

### FIELD

The present technology generally relates to the field of transporting gaseous hydrogen in an aircraft.

### BACKGROUND

To reduce the climatic impact of aviation, aircrafts powered by hydrogen are currently studied. This type of propulsion requires specific equipment, in particular one or more tanks containing hydrogen as well as pipes for transporting the hydrogen flow in the aircraft. It is known to use pipe sections that are connected one to another rather than a long single pipe because such sections ensure an adaptability of the transporting of the hydrogen in different types of environments, and hence in any complex aircraft structures. There is a need to optimize this configuration.

### SUMMARY

In one aspect, the inventive concepts of the present technology provides a system for transporting a gaseous fluid, preferably dihydrogen, comprising a first pipe for transporting said fluid, called first pipe, a second pipe for transporting said fluid, called second pipe, and a connector arranged to connect an end, called first connecting end, of the first pipe to an end, called second connecting end, of the second pipe, a zone comprising the first connecting end of the first pipe, the second connecting end of the second pipe and the connector, called connecting zone, the system comprising a protective jacket around the connecting zone against said first and second connecting ends and said connector.

Thanks to the present disclosure, there is provided a reliable system that optimizes the gaseous hydrogen flow in an aircraft and in particular reduces leakage probability.

Advantageously, the protective jacket is arranged to be tightly wrapped around the connecting zone.

Advantageously, the protective jacket is made in a flexible material.

Advantageously, the protective jacket is made of rubber, like nitrile rubber.

Advantageously, the system comprises a device for orienting a leak of the gaseous fluid disposed in the connecting zone, called orienting device.

Advantageously, the orienting device comprises a tube protruding from a hole of the protective jacket.

Advantageously, the orienting device is an insert comprising a basis between the connector and the protective jacket and said tube protruding from a hole of the protective jacket.

Advantageously, the system further comprises a sensor for detecting the gaseous fluid flowing from the orienting device.

In a related aspect of the inventive concepts, the present technology provides an aircraft, comprising the system as already described.

In a related aspect of the inventive concepts, the present technology provides a method for assembling a system for transporting a gaseous fluid, comprising:
- positioning a first pipe for transporting said fluid, called first pipe,
- positioning a second pipe for transporting said fluid, called second pipe,
- connecting an end, called first connecting end, of the first pipe to an end, called second connecting end, of the second pipe, by a connector, a zone comprising the first connecting end of the first pipe, the second connecting end of the second pipe and the connector, called connecting zone,
- positioning a protective jacket around the connecting zone against said first and second connecting ends and said connector.

Advantageously, the step of positioning the protective jacket around the connecting zone comprises a step of introducing a set of the protective jacket around the connecting zone and an applicator arranged to maintain the protective jacket spaced from the connecting ends and the connector and a step of removing the applicator.

Advantageously, the applicator is a spiral applicator.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
FIG. 1 depicts a schematic perspective view of a half of a detail of a system for transporting a gaseous fluid in an aircraft in accordance with the non-limiting embodiments of the present disclosure;
FIG. 2 depicts a schematic perspective view of a rubber jacket with an applicator for a method of assembling the system of FIG. 1;
FIG. 3 depicts a schematic perspective view of an aircraft comprising a system for transporting a gaseous fluid in accordance with the non-limiting embodiments of the present disclosure;
FIG. 4 depicts a method of assembling the system of FIG. 1.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative systems embodying the principles of the present technology.

With these fundamentals in place, we will now consider some non-limiting examples to illustrate the implementations of the various inventive aspects of the present disclosure.

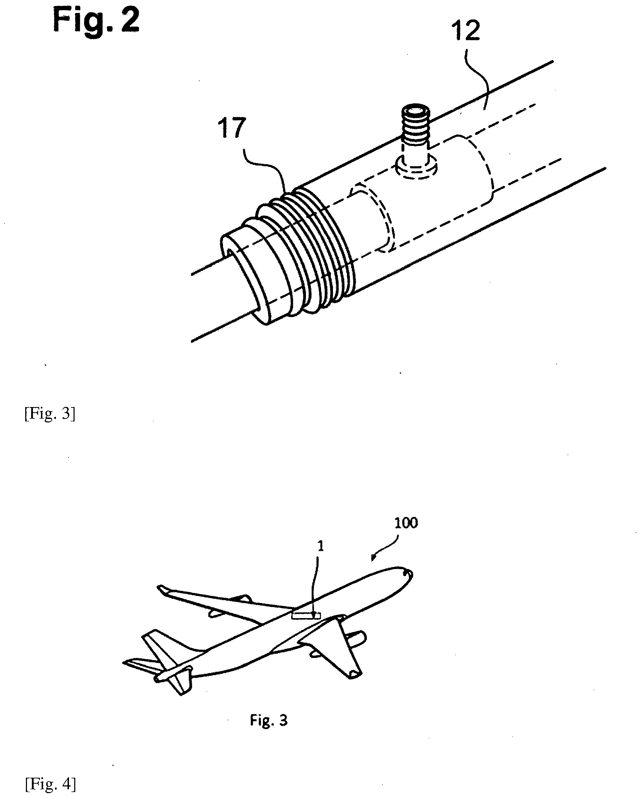

The present invention relates to a system, referred to as 1, for transporting a gaseous fluid, preferably dihydrogen (H2), in an aircraft, advantageously. An aircraft 100 equipped with such system 1 is represented in figure 3.

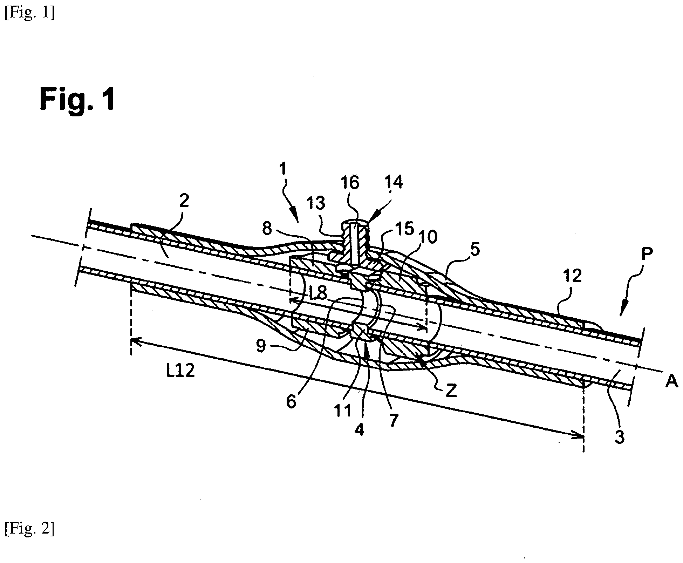

As can be seen from figure 1, the system 1 comprises at least a first pipe, 2, for transporting dihydrogen, and a second pipe, 3, for transporting dihydrogen, the first pipe 2 and the second pipe 3 being connected by a connector, called pipe union, 4. The system 1 also comprises a protective jacket 5, that will be described later.

Each of the first pipe 2 and the second pipe 3 preferably constitutes a section of a pipe P. The pipe P comprises a given number of sections depending on the environment of the aircraft in which the pipe P is to be installed.

As can be seen from figure 1, the first pipe 2 is a straight cylindrical tube extending from a first end (not shown) that can be connected to another pipe, or to a H2 tank, for instance, to a second end, referred to as 6, called first connecting end. Similarly, the second pipe 3 is a straight cylindrical tube extending from a first end (not shown) that can be connected to another pipe, or to a H2 tank, for instance, to a second end, referred to as 7, called second connecting end. The connecting ends 6, 7, are connected by the pipe union 4.

On figure 1, the first pipe 2 and the second pipe 3 are aligned along an axial direction A. The invention is not limited to this arrangement and the pipes 2, 3, can have curved portions.

As can also be seen from figure 1, the pipe union 4 comprises a casing 8 having a first part 9, a second part 10 and a middle part 11. The first part 9 is disposed around the first connecting end 6 of the first pipe 2. The second part 10 is disposed around the second connecting end 7 of the second pipe 3. The middle part 9 is disposed between the connecting ends 6 and 7, such that the pipe union 4 ensures continued flow of the hydrogen from one of the pipes 3, 4 to the other pipe 4, 3. A length L8 of the casing 8 in the A direction can be chosen, advantageously, between 1 cm to 10 cm, preferably between 2 cm and 5 cm.

The invention is not limited to the illustrated sleeve 8 but on the contrary encompasses any appropriate connector.

A zone Z comprising the connecting ends 6, 7 and the pipe union 4 is called connecting zone Z.

The protective jacket 5 is now detailed. The protective jacket 5 comprises a sleeve 12 that is disposed around the connecting zone Z against the connecting ends 6, 7 and the pipe union 4. The sleeve 12 being placed around the pipe union 4 constitutes a supplementary wall that ensures the flowing of the hydrogen inside the system 1 without leaking from it.

Preferably, the protective jacket 5 is arranged to be tightly wrapped around the connecting zone Z. The jacket 5 thus compresses and seals the system 1 in the zone Z. Advantageously, the protective jacket 5 is made of a flexible material, like rubber, preferably nitrile rubber. The nitrile rubber has good resistance to the expected temperature range of the gaseous fluid system.

A length L12 of the sleeve 12 of the protective jacket 5 in the axial direction A, when the protective jacket is in place around the zone Z, is chosen to be at least equal to the length L8 of the pipe union 4. The sleeve extends a few centimeters the pipe union 4. For instance, the length L12 can be chosen to be between 2 cm to 15 cm, preferably between 8 cm and 12 cm.

As can be seen from figure 1, the protective jacket 5 comprises a hole 13 to receive an orienting device 14 as now being described. Advantageously, the system 1 comprises said orienting device 14 that is arranged between the pipe union 4 and the protective jacket 5.

On figure 1, the orienting device 14 comprises a basis 15 and a tube 16. The basis 15 lays on the middle part 11 of the pipe union 4. The tube 16 protrudes from the hole 13 of the protective jacket 5. The orienting device 14 ensures the guiding of the gaseous hydrogen, if hydrogen is leaked from the pipes 2, 3 and the pipe union 4. On figure 1, the tube 16 is straight although the invention is not limited to this form and the tube can be of other geometries, depending on the path that is wanted for the hydrogen when outside the system 1. Also, the orienting device 14 can comprise additional tubes fixed to the tube 16 to guide the gaseous hydrogen.

On the illustrated embodiment, the orienting device 14 is an insert. However, the invention is not limited to this configuration and the orienting device can be integral with the protective jacket 5. For instance, the tube 16 of the orienting device 14 can be molded with the sleeve 12 of the protective jacket 5.

Advantageously, the system 1 further comprises a sensor 20 for detecting the gaseous hydrogen flowing from the orienting device. The sensor 20 is fixed on the orienting device 14, or on the protective jacket 5, or close to them in the aircraft environment.

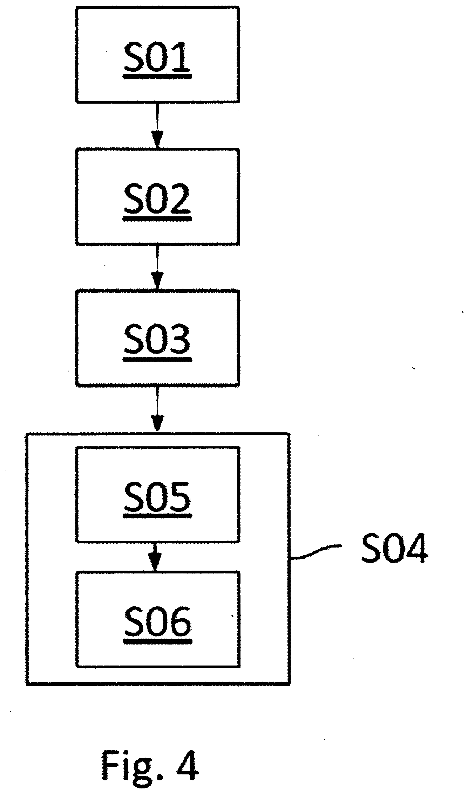

As can be seen from figures 2 and 4, the present invention also relates to a method for assembling the system 1. The method comprises preliminary steps S01, S02, S03 of:
- positioning the first pipe 2 and the second pipe 3, the connecting ends 6, 7 preferably facing each other (steps S01 and S02), and
- connecting the connecting ends 6, 7, with the pipe union 4 (step S03).

The method also comprises a step S04 of positioning the protective jacket 5 around the connecting zone Z against the connecting ends 6, 7 and the pipe union 4. Preferably, the positioning of the protective jacket 5 around the connecting zone Z comprises a step S05 of introducing a set of the sleeve 12 and an applicator 17. The applicator 17 is arranged to maintain the sleeve 12 spaced from the connecting ends 6, 7 and the pipe union 4. The set of the sleeve 12 and the applicator 17 is translated along the axial direction A, as can be seen from figure 2. Then, the method comprises a step S06 of removing the applicator 17.

Preferably, the applicator 17 is a coil whose spirals extend from a first end to another end. When the set is located around the connecting zone Z, one of the ends of the coil is pulled, which removes the applicator 17.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A system (1) for transporting a gaseous fluid, like dihydrogen, comprising a first pipe for transporting said fluid, called first pipe (2), a second pipe for transporting said fluid, called second pipe (3), and a connector (4) arranged to connect an end, called first connecting end (6), of the first pipe (2) to an end, called second connecting end (7), of the second pipe (3), a zone (Z) comprising the first connecting end (6) of the first pipe (2), the second connecting end (7) of the second pipe (3) and the connector (4) being called connecting zone (Z), the system (1) comprising a protective jacket (5) around the connecting zone (Z) against said first and second connecting ends (6, 7) and said connector (4).

2. The system (1) of claim 1, wherein the protective jacket (5) is arranged to be tightly wrapped around the connecting zone (Z).

3. The system (1) of claim 1 or claim 2, wherein the protective jacket (5) is made in a flexible material.

4. The system (1) of the preceding claim, wherein the protective sleeve (5) is made of rubber, like nitrile rubber.

5. The system (1) of any of the preceding claims, comprising a device for orienting a leak of the gaseous fluid disposed in the connecting zone (Z), called orienting device (14).

6. The system (1) of the preceding claim, wherein the orienting device (14) comprises a tube (16) protruding from a hole (13) of the protective jacket (5).

7. The system (1) of claim 6, wherein the orienting device (14) is an insert comprising a basis (15) between the connector (4) and the protective jacket (5) and said tube (16) protruding from said hole (13) of the protective jacket (5).

8. The system (1) of any of claims 5 to 7, further comprising a sensor (20) for detecting the gaseous fluid flowing from the orienting device (14).

9. Aircraft (100), comprising the system (1) of any of the preceding claims.

10. Method for assembling a system (1) for transporting a gaseous fluid, comprising:
- a step (S01) of positioning a first pipe for transporting said fluid, called first pipe (2),
- a step (S02) of positioning a second pipe for transporting said fluid, called second pipe (3),
- a step (S03) of connecting an end, called first connecting end, of the first pipe to an end, called second connecting end (6), of the second pipe, by a connector (4), a zone comprising the first connecting end (6) of the first pipe (2), the second connecting end (7) of the second pipe (3) and the connector (4) being called connecting zone (Z),
- a step (S04) of positioning a protective jacket (5) around the connecting zone (Z) against said connecting ends (6, 7) and said connector (4).

11. The method of the preceding claim, wherein the step (S04) of positioning the protective jacket (5) around the connecting zone (Z) comprises a step (S05) of introducing a set of the protective jacket (5) and an applicator (17) around the connecting zone, the applicator (17) being arranged to maintain the protective jacket (5) spaced from the connecting ends (6, 7) and the connector (4), and a step (S06) of removing the applicator (17).

12. The method of the preceding claim, wherein the applicator (17) is a spiral applicator.
